# FASCICULE DE BREVET EUROPEEN

(11) **EP 3 586 691 B1**
(45) Date de publication et mention de la délivrance du brevet: **17.04.2024**
(21) Numéro de dépôt: 19182599.1
(22) Date de dépôt: 26.06.2019
(51) Int. Cl.: A47J 31/06, A47G 19/16, A47G 19/22

(54) **DISPOSITIF POUR LA PREPARATION D'UNE INFUSION**
VORRICHTUNG ZUR ZUBEREITUNG EINES KRÄUTERTEES
DEVICE FOR PREPARING AN INFUSION

(30) Priorité: 26.06.2018 FR 1855701
(43) Date de publication de la demande: 01.01.2020
(73) Titulaire: Terraemo, 30200 Vénéjan (FR)
(72) Inventeur: Daimallah, Ali, 30200 Vénéjan (FR)
(74) Mandataire: Marchand, André

(56) Documents cités:
- EP-A1- 2 891 428
- DE-U1- 9 000 061
- GB-A- 2 368 333
- US-A1- 2012 201 941
- US-A1- 2012 205 390
- US-A1- 2016 073 817

## Description

La présente invention concerne la préparation d'infusions, et en particulier, la préparation d'infusions à partir d'un sachet poreux.

De nombreuses boissons sont préparées en plongeant un produit à infuser, dans un liquide tel que de l'eau chaude, pendant un certain temps. A cet effet, le produit à infuser peut être disposé dans un réservoir poreux, tel qu'un sachet poreux ou une capsule perforée (une boule à thé). L'immersion du sachet ou de la capsule dans le liquide permet aux éléments solubles du produit à infuser contenu dans le sachet ou la capsule, de se répandre dans le liquide, ce qui produit l'infusion. Généralement, plus le produit à infuser est maintenu longtemps dans le liquide, plus l'infusion est forte. Cependant, dans le cas de certaines infusions comme le thé, il est généralement préférable de ne pas laisser l'infusion trop longtemps dans le liquide, afin d'éviter que l'infusion soit trop forte ou trop amère.

Pour faciliter le contrôle du temps d'infusion, le sachet poreux est habituellement fixé à l'extrémité d'un fil dont l'extrémité opposée est fixée à une étiquette. De cette manière, le sachet peut être plongé et retiré du liquide à tout moment sans avoir à tenir le sachet ou mettre les doigts dans le liquide, ou sans avoir à utiliser un instrument supplémentaire tel qu'une cuillère. Cependant, à l'issue du temps d'infusion, il est nécessaire de retirer le sachet du liquide et de l'égoutter, ce qui nécessite également un instrument supplémentaire tel qu'une cuillère pour presser le sachet, et un récipient pour disposer le sachet une fois égoutté afin d'éviter que le liquide résiduel restant dans le sachet ne se répande autour du sachet.

Le brevet US 6 460 725 décrit un couvercle adapté pour être disposé sur un récipient dans lequel une infusion est préparée. Le couvercle est muni d'une ouverture ayant une taille adaptée pour laisser passer l'étiquette à l'extrémité du fil attaché au sachet, tout en bloquant le sachet en position élevée. Le sachet peut ensuite être égoutté en tirant sur le fil jusqu'à ce qu'il soit tiré hors du liquide et pressé contre l'intérieur du couvercle ou contre les bords de l'ouverture. L'ouverture peut comporter une partie étroite formant une fente permettant de bloquer le fil, et ainsi maintenir le sachet à une hauteur choisie dans le récipient, soit dans le liquide, soit contre le couvercle, tout en maintenant le couvercle sur le récipient.

Or la présence d'ouvertures dans le couvercle entraine une déperdition de chaleur et donc un refroidissement plus rapide de l'infusion, et le risque que du liquide résiduel encore présent dans le sachet se répande hors du couvercle.

Le document US 2016/073817 A1 décrit un gobelet d'infusion comprenant un gobelet, un couvercle et un sachet de substance d'infusion compressible. Un trou traverse le couvercle et une pièce de positionnement se trouve sur le bord extérieur du couvercle. Un sachet de substance d'infusion comprend un filin, un couvercle et une pièce de positionnement. Lorsque le dispositif de positionnement se trouve en position d'infusion, il est entraîné par la gravité du corps couvert et arrêté par le couvercle. Lorsque le dispositif de positionnement est en position de compression, il est fixé à la partie de positionnement du couvercle, de sorte que le corps couvert peut être tiré vers le haut, enfoncé et positionné à l'intérieur du couvercle.

Le document US 2012/201941 A1 décrit un couvercle de récipient comprenant une plateforme interne prévue pour maintenir un sachet d'infusion hors du liquide contenu dans le récipient, un fil couplé au sachet étant préalablement introduit entre le couvercle et cette plateforme, sur laquelle le sachet se positionne si l'on tire sur le fil.

Il peut être souhaitable de limiter le refroidissement du liquide autant que possible, pendant le temps d'infusion et jusqu'à ce que ce que l'infusion soit consommée. Il peut également être souhaitable de pouvoir ajuster la hauteur du sachet dans le récipient. Il peut être également souhaitable de maintenir le sachet au centre du récipient pendant la durée de l'infusion, ceci afin d'améliorer la diffusion des éléments solubles du produit à infuser dans le liquide. Il peut encore être souhaitable de permettre le stockage du sachet pendant la consommation de l'infusion ou pour accélérer le refroidissement de celle-ci, tout en empêchant le liquide encore présent dans le sachet de se répandre autour du sachet d'une manière incontrôlée, et en autorisant une réutilisation du sachet pour préparer une nouvelle infusion. Il peut encore être souhaitable d'éviter d'avoir à manipuler le sachet d'infusion directement avec les doigts pour l'égoutter ou l'évacuer.

L'invention concerne un dispositif de préparation d'une infusion conforme à la revendication 1.

L'invention concerne également un procédé de préparation d'une infusion conforme à la revendication 9.

Des exemples de réalisation de l'invention seront décrits dans ce qui suit, à titre non limitatif en relation avec les figures jointes parmi lesquelles :
La figure 1 représente schématiquement en perspective, un récipient et un couvercle adapté à la préparation d'une infusion, selon un mode de réalisation,
La figure 1A est une vue en perspective schématique d'un détail du couvercle, selon un mode de réalisation,
La figure 2 est une vue en perspective schématique du couvercle de la figure 1,
La figure 3 est une vue en perspective schématique, partiellement éclatée du couvercle,
La figure 4 est une vue en perspective schématique du couvercle, selon un autre mode de réalisation,
La figure 4A est une vue en perspective schématique d'un détail du couvercle de la figure 4, selon un mode de réalisation,
La figure 5 est une vue en perspective schématique du couvercle, selon un autre mode de réalisation,
La figure 6 est une vue en perspective schématique, partiellement éclatée, du couvercle de la figure 5,
La figure 7 est une vue en perspective schématique du couvercle selon un autre mode de réalisation,
La figure 8 est une vue en perspective schématique du couvercle selon un autre mode de réalisation,
La figure 9 est une vue en perspective schématique, partiellement éclatée, du couvercle, selon un autre mode de réalisation,
La figure 10 est une vue en perspective schématique d'un couvercle selon un autre mode de réalisation,
La figure 11 représente schématiquement en perspective, un récipient et un dispositif adapté à la préparation d'une infusion, selon un autre mode de réalisation,
La figure 12 représente schématiquement en perspective, le dispositif de la figure 11.

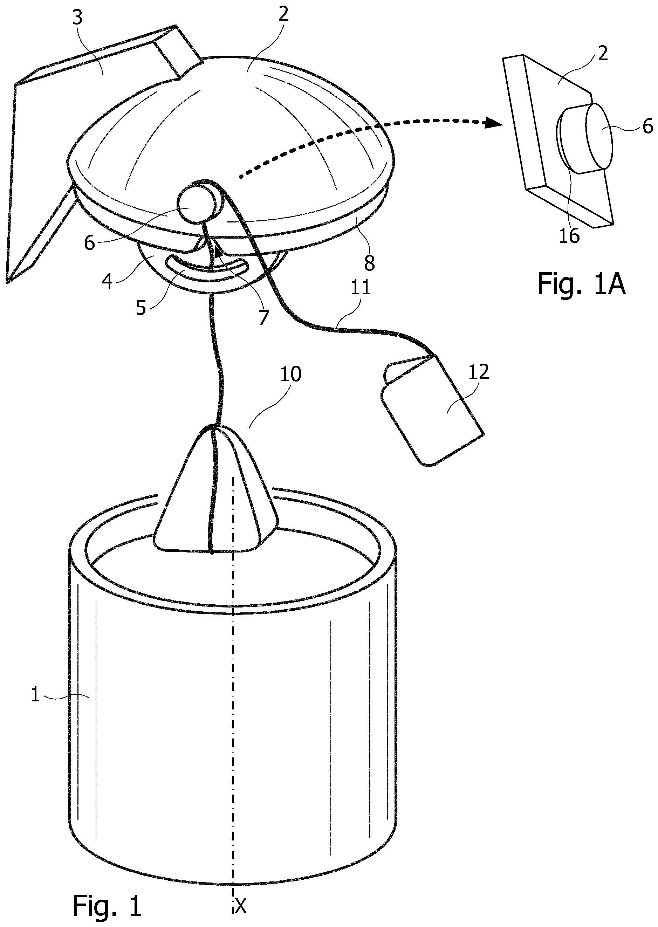

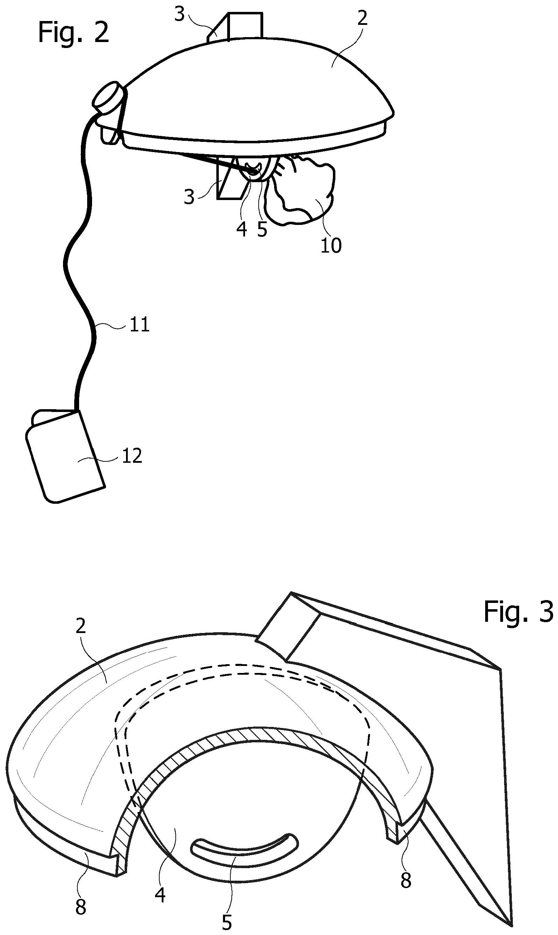

Les figures 1 à 3 représentent un récipient 1 (figure 1) et un couvercle 2 selon un mode de réalisation, adaptés pour préparer une infusion à partir d'un sachet poreux contenant un produit à infuser. Le couvercle présente une face externe convexe et une face interne concave. Selon un mode de réalisation, le couvercle 2 comprend une cloison interne 4 solidaire de la face interne du couvercle. La cloison 4 présente une ouverture 5 prévue pour le passage d'une étiquette 12 d'un sachet d'infusion poreux 10, l'étiquette et le sachet étant liés entre eux par un fil 11. La cloison 4 peut être disposée perpendiculairement au plan de l'ouverture du récipient.

De cette manière, la hauteur du sachet 10 dans le récipient 1 peut être ajustée en jouant sur la longueur du fil dans le récipient 1. Le couvercle ne comporte aucune ouverture susceptible d'accélérer le refroidissement du liquide dans le récipient 1. Ainsi, le liquide dans le récipient 1 peut garder plus longtemps la température idéale pour réaliser l'infusion, ainsi que la température idéale pour la consommation de l'infusion. La présence du couvercle sans ouverture permet également de retenir les arômes qui s'échappent du liquide pendant l'infusion. Ainsi, lorsque le couvercle est retiré pour consommer l'infusion, ces arômes sont encore présents et d'une manière suffisamment concentrée pour pouvoir être perçus par le consommateur.

En tirant sur le fil 11, le sachet 10 peut être retiré du liquide dans le récipient 1 et venir se loger dans le couvercle 2. Si le fil 11 est tiré plus fortement, le sachet 10 peut être pressé contre la paroi 4 et donc être égoutté. Il peut être noté que cette opération est effectuée sans avoir à retirer le couvercle 2 du récipient.

Lorsque le sachet 10 est pressé contre la paroi 4, le couvercle 2 peut être retiré du récipient 1 et posé sur sa face convexe. Le sachet se trouve alors sur la face concave du couvercle 2, qui est alors tournée vers le haut. Ainsi, le couvercle peut retenir le liquide résiduel pouvant s'écouler du sachet 10. Il est alors possible de presser davantage le sachet par exemple à l'aide du dos d'une cuillère, contre la cloison 4 et la face interne du couvercle 2.

Le couvercle 2 comprend un bord prévu pour se poser sur le bord du récipient 1. Le couvercle 2 peut également comporter une collerette 8 prévue pour s'engager dans le récipient 1 contre ce dernier, le long de son ouverture. Alternativement ou simultanément, le bord du couvercle 2 peut également comporter une collerette externe prévue pour entourer le bord de l'ouverture du récipient 1. Le couvercle 2 peut également comprendre une poignée 3.

Lorsque le fil 11 est passé par l'ouverture 5, avec l'étiquette 12 disposée à l'extérieur du couvercle 2, et que le couvercle 2 est disposé sur le récipient 1, le fil 11 est naturellement pincé entre le récipient 1 et le couvercle 2. Cependant, il peut être prévu de former une encoche 7 dans le bord du couvercle 2 (ou du récipient 1) pour éviter ce pincement. Il est à noter que l'encoche 7 peut former une ouverture extrêmement réduite, pour simplement autoriser un coulissement du fil 11. L'encoche 7 peut donc être réalisée de manière à ne pas influer sur le refroidissement du liquide dans le récipient 1. Ainsi, l'encoche peut être réalisée uniquement dans la collerette 8 ou peut s'étendre légèrement au-dessus de cette dernière dans le bord du couvercle 2, sachant qu'il n'est pas nécessaire que les dimensions de cette extension dépassent le diamètre du fil 11.

Par ailleurs, le couvercle 2 peut être équipé d'un organe de blocage 6 du fil 11. Dans l'exemple des figures 1 à 3, l'organe de blocage 6 présente la forme d'une excroissance rapportée sur la face externe du couvercle 2. La forme de l'excroissance présente une forme quelconque par exemple cylindrique. L'excroissance 6 peut présenter, par exemple à sa base une rainure annulaire 16 dans laquelle le fil 11 peut être coincé par friction.

L'organe de blocage 6 permet de maintenir le sachet 10 en position basse dans le liquide, ou en position haute en dehors du liquide, ou encore en position d'égouttage. Dans la position d'égouttage, le couvercle 2 peut être retourné, face interne vers le haut, le sachet restant maintenu contre la cloison 4.

L'ouverture 5 et la cloison 4 peuvent être placées dans le couvercle 2 de manière à positionner le centre du sachet 10 sensiblement sur l'axe longitudinal X du récipient 1. A cet effet, l'ouverture 5 peut également présenter un point bas sur lequel le fil 11 vient naturellement se placer par gravité. Ce point bas peut être placé sensiblement sur l'axe longitudinal X du récipient 1, lorsque le couvercle 2 est placé sur le récipient 1. Ainsi, grâce à la cloison 4 et l'ouverture 5 formée dans la cloison, le sachet 10 peut être maintenu sensiblement au centre du récipient 1, ce qui permet d'assurer une diffusion uniforme dans tout le liquide contenu dans le récipient, des éléments solubles contenus dans l'infusion présente dans le sachet 10. Cette disposition permet également aux éléments solubles d'être brassés et de se diffuser à partir de l'ensemble de la surface du sachet.

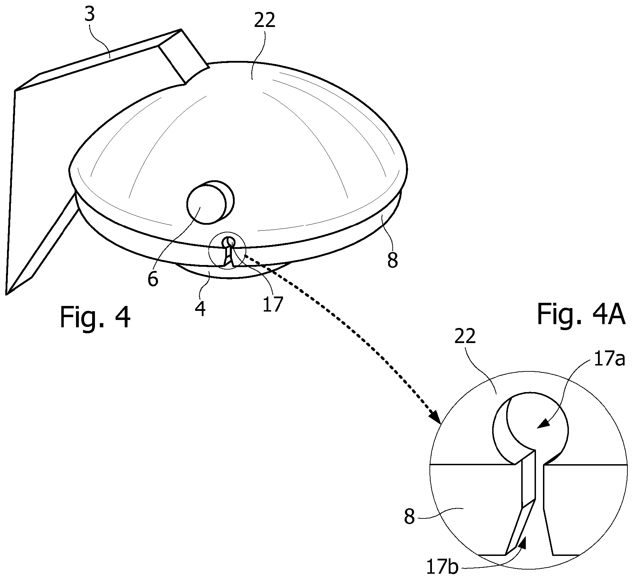

Les figures 4 et 4A représentent un couvercle 22, selon un autre mode de réalisation. Le couvercle 22 diffère du couvercle 2 en ce que l'encoche 7 est remplacée par une fente 17b traversant la collerette 8 et débouchant d'un côté sur le bord de la collerette 8 et de l'autre côté, dans un orifice 17a de forme par exemple circulaire, traversant l'épaisseur du couvercle 22. La fente 17b présente une largeur telle que le fil 11 ne peut la franchir qu'en forçant son passage. La fente 17b peut présenter une forme évasée en débouchant sur le bord de la collerette 8 pour faciliter l'insertion du fil 11 dans la fente 17b. De cette manière, le fil 11 peut être maintenu dans l'orifice 17a, notamment lorsque le couvercle 22 est soulevé du récipient 1, à la différence de l'encoche 7. L'organe de blocage 6 peut être remplacé par une fente étroite débouchant dans l'orifice 17a, dans laquelle le fil 11 peut être coincé.

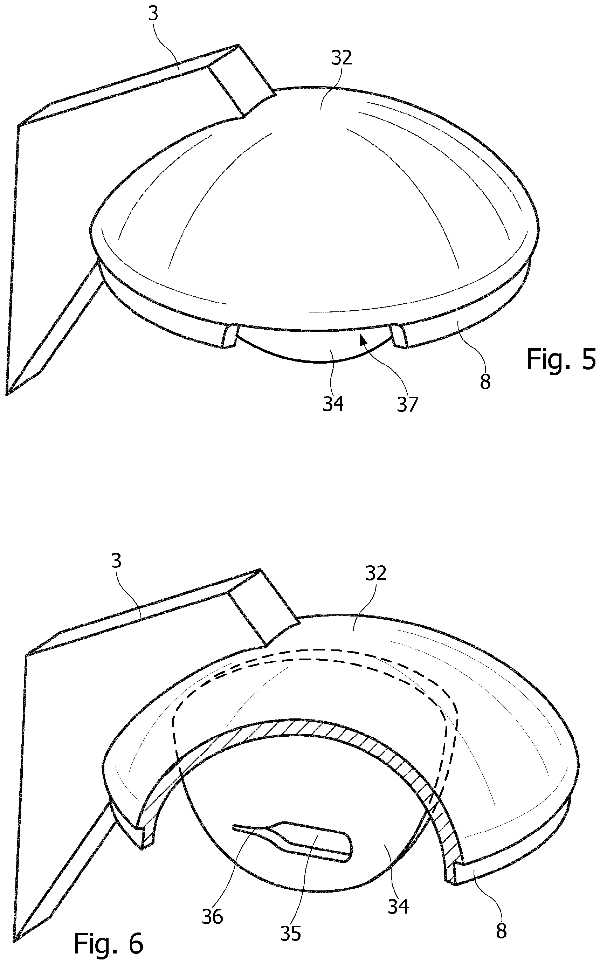

Les figures 5 et 6 représentent un couvercle 32 selon un autre mode de réalisation. Le couvercle 32 diffère du couvercle 2 en ce que l'ouverture 5 est remplacée par une ouverture 35 formée dans une cloison 34, et en ce la cloison 34 comprend une fente 36 débouchant dans l'ouverture 35 et dans laquelle le fil 11 peut être coincé. Pour faciliter l'engagement du fil 11 dans la fente 36, cette dernière s'étend sensiblement dans un plan parallèle au bord du couvercle 32. Ainsi, le fil 11 peut être engagé dans la fente 36 par un mouvement transversal du fil le long du bord du couvercle 32. Pour faciliter ce mouvement lorsque le couvercle 32 est disposé sur le récipient 1, l'encoche 7 peut être élargie en retirant la partie de la collerette 8 dans toute une région 37 où le fil 11 doit pouvoir glisser pour être engagé ou retiré de la fente 36. Le retrait de la collerette 8 dans la région 37 constitue une ouverture extrêmement réduite et donc présente une faible influence sur le refroidissement du liquide dans le récipient 1.

La position de blocage du fil 11 dans la fente 36 formée dans la cloison 34 peut être également située de manière à centrer le sachet 10 sensiblement sur l'axe longitudinal du récipient 1.

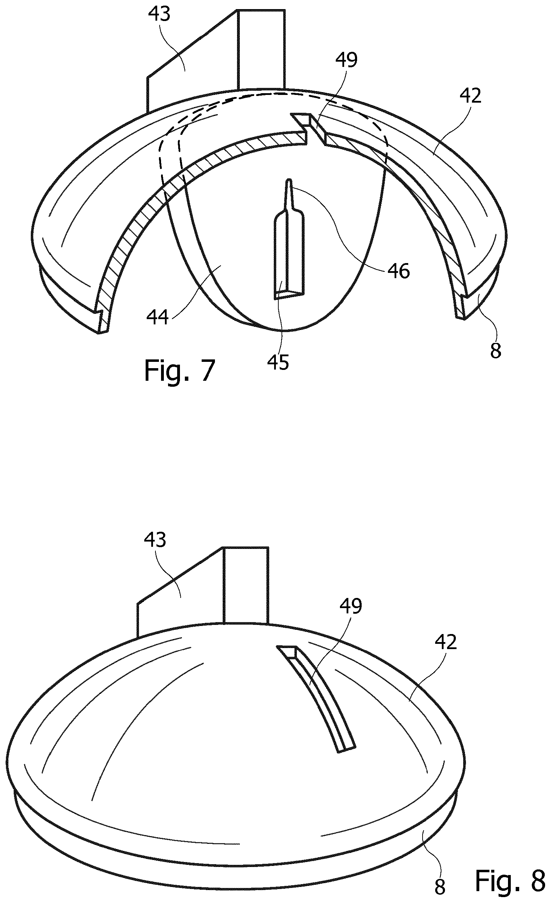

Les figures 7 et 8 représentent un couvercle 42 selon un autre mode de réalisation. Le couvercle 42 diffère du couvercle 32 en ce qu'il comporte une ouverture 45 et une fente 46 formées dans une cloison 44, la fente s'étendant non pas dans une direction parallèle au plan du bord du couvercle 42, mais dans une autre direction, par exemple perpendiculaire. La cloison 44 peut présenter la même position dans le couvercle 32 que la cloison 4. La fente 46 est formée au-dessus de l'ouverture 45. Pour permettre le blocage du fil 11 dans la fente 46, le couvercle 42 comporte une fente 49 s'étendant entre une position basse dans laquelle le fil 11 peut être extrait de la fente 46, et une position haute dans laquelle le fil 11 peut être bloqué dans la fente 46. Par ailleurs, le couvercle 42 peut comporter une poignée 43. La fente 49 peut présenter une largeur limitée nécessaire au passage de l'étiquette 12 et du fil 11, notamment pour limiter son influence sur le refroidissement du liquide dans le récipient 1.

Ici encore, la position de blocage du fil 11 dans la fente 46 formée dans la cloison 44 peut être située de manière à centrer le sachet 10 sensiblement sur l'axe longitudinal du récipient 1.

La forme et la position de la poignée 43 peuvent être agencées de manière à maintenir la fente 49 en position haute, lorsque le couvercle 42 est posé sur sa face externe, afin d'empêcher le liquide résiduel encore présent dans le sachet de s'écouler par cette fente.

Dans les modes de réalisation décrits en référence aux figures 5 à 8, l'ensemble du dispositif 34, 35, 44, 45 de retenue et de pressage du sachet et de l'organe de blocage 36, 46 du fil se trouve à l'intérieur du couvercle 32, 42.

Il apparaîtra clairement à l'homme de l'art que la présente invention est susceptible de diverses variantes de réalisation et diverses applications. En particulier, l'invention définie par les revendications annexées n'est pas limitée aux formes précédemment décrites de la cloison interne et de l'ouverture. Il importe simplement que l'ouverture puisse assurer les fonctions de maintien et de coulissement du fil 11 pour placer le sachet 10 dans des positions haute, en dehors du liquide dans le récipient, basse dans le liquide, et d'égouttage où le sachet peut être pressé contre les bords de l'ouverture en tirant sur le fil 11. Ainsi l'ouverture peut également désigner par exemple un anneau ou un crochet fixé sur la face interne du couvercle, prévu pour recevoir le fil 11.

La cloison 4, 34, 44 avec l'ouverture 5, 35, 45 n'est pas nécessairement réalisée suivant l'axe longitudinal du récipient 1, mais peut présenter une autre orientation. Ainsi, la cloison peut également s'étendre perpendiculairement à cet axe, par exemple depuis une région voisine du bord du couvercle. La cloison 4, 34, 44 n'est pas non plus nécessairement plane, mais peut présenter toute autre forme.

Par ailleurs, le couvercle n'est pas non plus limité aux formes de couvercle précédemment décrites ou présentées dans les figures 1 à 10. Il importe simplement que le couvercle présente une forme généralement concave afin de pouvoir être posé retourné et retenir le liquide résiduel restant dans le sachet maintenu dans le couvercle en position d'égouttage. Ainsi, le couvercle peut par exemple présenter une forme générale cylindrique avec une paroi supérieure plane, concave ou convexe. Le couvercle peut également ne pas comporter de poignée ou présenter d'autres formes de poignées. Par exemple, la poignée peut être configurée pour maintenir le couvercle dans une certaine position lorsqu'il est retourné, notamment pour éviter un balancement du couvercle pouvant se produire lorsque la face externe du couvercle est bombée.

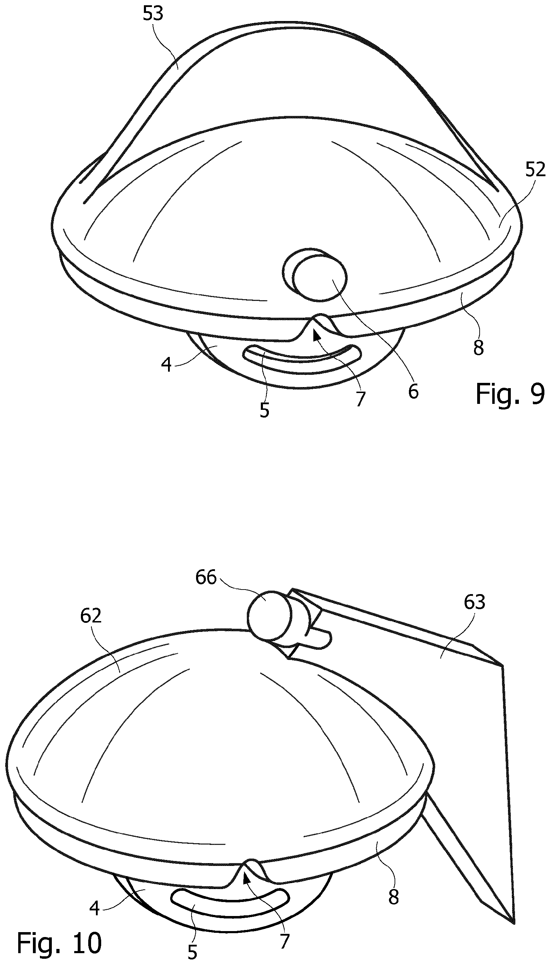

La figure 9 représente un couvercle 42 comportant une poignée 43 ayant une forme différente des poignées représentées sur les figures 1 à 6.

La figure 10 représente un couvercle 52 comportant une poignée 53 qui peut être identique à la poignée représentée sur les figures 1 à 6. Sur la figure 10, l'organe de blocage 6 du fil est disposé, non pas sur le couvercle, mais sur la poignée 63. L'organe de blocage peut également être réalisé sous la forme d'une fente formée dans la poignée.

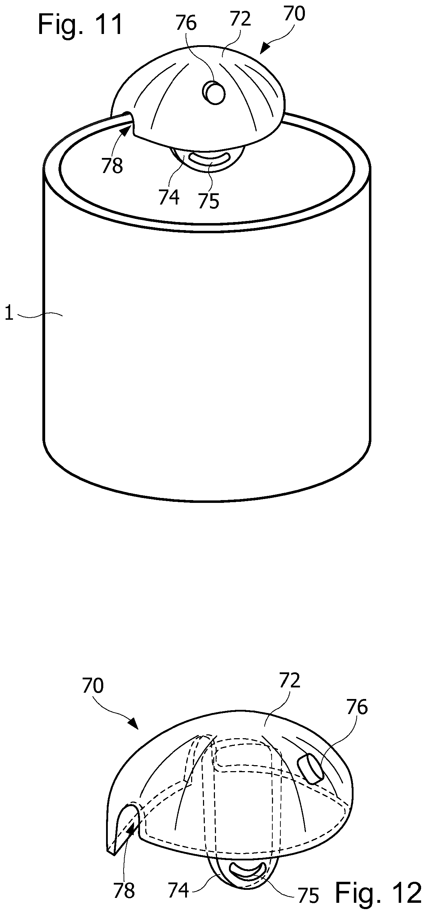

En outre, le couvercle ne ferme pas nécessairement totalement l'ouverture du récipient. Ainsi, les figures 11 et 12 représentent un dispositif de maintien et d'égouttage 70 de sachet d'infusion. Le dispositif 70 présente sensiblement la même forme que le couvercle 2, à part qu'il présente une taille réduite ne couvrant qu'une partie de l'ouverture du récipient 1. Ainsi, le dispositif 70 comprend une enveloppe externe 72 et une cloison 74 solidaire de la face interne de l'enveloppe externe. La cloison 74 présente une ouverture 75 prévue pour le passage de l'étiquette 12 d'un sachet d'infusion 10. Le dispositif 70 est prévu pour être posé sur le bord du récipient. A cet effet, il comprend une gorge 78 d'emboitement configurée pour recevoir une partie du bord du récipient 1, et maintenir ainsi le dispositif 70 sur ce dernier. Lorsque le dispositif 70 est posé avec la gorge 78 disposée à cheval sur le bord du récipient 1, comme illustré sur la figure 11, le dispositif 70 se trouve maintenu sans pouvoir basculer vers l'intérieur ou l'extérieur du récipient. La cloison 74 délimite avec la face interne de l'enveloppe externe 72 un logement dans lequel le sachet 10 peut s'engager lorsqu'on tire sur le fil 11 préalablement engagé dans l'ouverture 75. Le dispositif 70 peut également comprendre un organe de blocage 76 du fil 11. Dans l'exemple des figures 11 et 12, l'organe de blocage 76 est sensiblement identique à l'organe de blocage 6 précédemment décrit est disposé sur l'enveloppe externe 72. Bien entendu, l'organe de blocage peut également être réalisé sous la forme d'une fente étroite débouchant dans l'ouverture 75.

Dans les exemples précédemment décrits, le récipient 1 présente une forme cylindrique à section circulaire, et le couvercle présente une forme adaptée au bord du récipient 1. Bien entendu, la section droite du récipient 1 peut présenter une autre forme, telle qu'une forme carrée ou polygonale.

Le dispositif de préparation d'infusions peut être réalisé dans n'importe quel matériau, tel que ceux utilisés pour réaliser des récipients ou couvercles pour le service d'infusions (céramique, verre, métal, matière plastique, etc.). Le récipient et/ou le couvercle peuvent être réalisés dans un matériau isotherme ou comporter une structure isotherme.

Les modes de réalisation précédemment décrits sont adaptés à un sachet d'infusion en papier poreux ou en tissu tissé ou non tissé.

## Revendications

1. Dispositif de préparation d'une infusion, comprenant un couvercle (2, 22, 32, 42, 52, 62, 72) configuré pour se placer sur le bord d'une ouverture d'un récipient (1) pour la consommation ou la préparation d'une infusion, le dispositif comprenant :
un élément de retenue (4, 5) solidaire d'une face interne du couvercle, configuré pour assurer le maintien et le coulissement d'un élément de liaison (11) souple couplé à un sachet (10) poreux contenant un produit à infuser, l'élément de retenue étant une cloison interne (4, 34, 44, 74) contre laquelle le sachet peut être pressé en tirant sur l'élément de liaison, sans avoir à retirer le couvercle du récipient, la cloison présentant une ouverture (5, 35, 45, 75) pour le passage de l'élément de liaison (11), et
un organe de blocage (6, 36, 46, 66, 76) coopérant avec l'élément de liaison pour bloquer le sachet en différentes positions ajustables, y compris après pressage du sachet et sans avoir à retirer le couvercle du récipient,
la face interne du couvercle étant généralement concave pour retenir un liquide lorsque le couvercle est retiré du récipient (1) et disposé avec la face interne orientée vers le haut.

2. Dispositif selon la revendication 1, dans lequel l'élément de retenue (4, 5) est placé dans le couvercle de manière à suspendre le sachet (10) centré le long d'un axe longitudinal (X) du récipient (1), par l'intermédiaire de l'élément de liaison (11), lorsque le couvercle est placé sur le bord de l'ouverture du récipient.

3. Dispositif selon la revendication 2, dans lequel dans lequel l'organe de blocage (6, 36, 46, 66, 76) :
est disposé sur une face externe du couvercle (2, 22, 52, 72), ou
est disposé ou formé sur une poignée (63) solidaire de la face externe du couvercle, ou
présente la forme d'une fente étroite (36, 46) débouchant dans l'ouverture (35, 45), ou
comprend une rainure annulaire (16) dans laquelle l'élément de liaison (11) peut être coincé, ou
présente la forme d'une fente étroite (36) débouchant dans l'ouverture (35) et s'étendant parallèlement au plan de l'ouverture du récipient (1), le couvercle présentant une encoche (37) configurée pour permettre un déplacement transversal de l'élément de liaison entre une position où l'élément de liaison peut coulisser librement et une position où il est bloqué dans la fente, ou
présente la forme d'une fente étroite (46) débouchant dans l'ouverture (45) et s'étendant dans une direction n'appartenant pas au plan de l'ouverture du récipient, le couvercle comportant une fente (49) pour le passage et la manipulation de l'élément de liaison (11) au travers du couvercle, ou
présente la forme d'une fente étroite débouchant d'un côté sur le bord du couvercle (2).

4. Dispositif selon l'une des revendications 1 à 3, comprenant une poignée (3, 43, 53, 63) agencée sur une face du couvercle (2, 22, 32, 42, 52, 62, 72) et configurée pour maintenir le couvercle dans une certaine position lorsqu'il est retourné, la face interne étant orientée vers le haut.

5. Dispositif selon l'une des revendications 1 à 4, dans lequel le couvercle (2, 22, 32, 42, 52, 62) est configuré pour fermer l'ouverture du récipient (1).

6. Dispositif selon la revendication 5, dans lequel le couvercle comporte une encoche (7, 17, 37) formée dans son bord et conformée pour faciliter le passage de l'élément de liaison (11) entre l'intérieur et l'extérieur du récipient (1).

7. Dispositif selon la revendication 6, dans lequel l'encoche présente la forme d'une fente (17b) débouchant dans un orifice (17a) traversant le couvercle, la fente présentant une largeur telle que l'élément de liaison (11) ne peut pas la traverser sans y être forcé.

8. Dispositif selon l'une des revendications 1 à 3, dans lequel le couvercle (72) est configuré pour se maintenir à cheval sur le bord de l'ouverture d'un récipient (1) utilisé pour préparer ou consommer une infusion, sans obturer l'ouverture du récipient.

9. Procédé de préparation d'une infusion, comprenant des étapes consistant à :
prévoir un récipient (1) pour la consommation ou la préparation d'une infusion,
prévoir un couvercle (2, 22, 32, 42, 52, 62, 72) configuré pour se placer sur le bord d'une ouverture du récipient, et comportant une face interne généralement concave,
prévoir un sachet (10) poreux contenant un produit à infuser, et couplé à un élément de liaison (11) souple,
prévoir dans le couvercle un élément de retenue (4, 5) solidaire d'une face interne du couvercle, configuré pour assurer le maintien et le coulissement de l'élément de liaison (11) souple du sachet (10) poreux, l'élément de retenue étant une cloison interne (4, 34, 44, 74) contre laquelle le sachet peut être pressé en tirant sur l'élément de liaison, sans avoir à retirer le couvercle du récipient, la cloison présentant une ouverture (5, 35, 45, 75) pour le passage de l'élément de liaison (11),
prévoir un organe de blocage (6, 36, 46, 66, 76) coopérant avec l'élément de liaison pour bloquer le sachet en différentes positions ajustables, y compris après pressage du sachet et sans avoir à retirer le couvercle du récipient,
introduire l'élément de liaison dans l'élément de retenue (4, 5), et
bloquer l'élément de liaison à l'aide de l'organe de blocage (6, 36, 46, 66, 76) pour maintenir le sachet en différentes positions ajustables dans ou en dehors d'un liquide présent dans le récipient, y compris après pressage du sachet contre un bord de l'élément de retenue et sans avoir à retirer le couvercle du récipient.

10. Procédé selon la revendication 9, comprenant des étapes consistant à :
bloquer l'élément de liaison (11) à l'aide de l'organe de blocage (6, 36, 46, 66, 76), pour maintenir le sachet (10) en une position basse où il est immergé dans un liquide présent dans le récipient (1),
bloquer l'élément de liaison à l'aide de l'organe de blocage, pour maintenir le sachet en une position d'égouttage contre l'élément de retenue (4, 5), et
retourner le couvercle avec la face interne tournée vers le haut, lorsque le sachet est en position d'égouttage, le liquide susceptible de s'écouler du sachet étant retenu dans la face interne.

## Patentansprüche

1. Vorrichtung zur Zubereitung eines Aufgusses, umfassend einen Deckel (2, 22, 32, 42, 52, 62, 72), der so konfiguriert ist, dass er auf dem Rand einer Öffnung eines Behälters (1) zum Trinken oder zur Zubereitung eines Aufgusses aufliegt,
wobei die Vorrichtung umfasst:
ein Halteelement (4, 5), das mit einer Innenseite des Deckels fest verbunden ist und so konfiguriert ist, dass es den Halt und das Gleiten eines flexiblen Verbindungselements (11) gewährleistet, das mit einem porösen Beutel (10) gekoppelt ist, der ein aufzubringende Produkt enthält, wobei das Halteelement eine innere Trennwand (4, 34, 44, 74) ist, gegen die der Beutel durch Ziehen am Verbindungselement gedrückt werden kann, ohne dass der Deckel des Behälters abgenommen werden muss, da die Trennwand eine Öffnung (5, 35, 45, 75) für den Durchgang des Verbindungselements (11) aufweist,
ein Blockierorgan (6, 36, 46, 66, 76), das mit dem Verbindungselement zusammenwirkt, um den Beutel in verschiedenen einstellbaren Positionen zu blockieren, auch nach dem Pressen des Beutels und ohne dass der Deckel vom Behälter entfernt werden muss,
wobei die Innenseite des Deckels im Allgemeinen konkav ist, um eine Flüssigkeit zurückzuhalten, wenn der Deckel vom Behälter (1) abgenommen wird, und mit der Innenseite nach oben gerichtet angeordnet ist.

2. Vorrichtung nach Anspruch 1, wobei das Halteelement (4, 5) in dem Deckel so angeordnet ist, dass der Beutel (10) zentriert entlang einer Längsachse (X) des Behälters (1) über das Verbindungselement (11) aufgehängt wird, wenn der Deckel auf den Rand der Behälteröffnung gesetzt wird.

3. Vorrichtung nach Anspruch 2, wobei bei dieser Vorrichtung das Blockierelement (6, 36, 46, 66, 76) :
auf einer Außenseite des Deckels (2, 22, 52, 72) angeordnet ist, oder
an einem Griff (63) angeordnet oder ausgebildet ist, der fest mit der Außenseite des Deckels verbunden ist, oder
die Form eines schmalen Schlitzes (36, 46) aufweist, der in die Öffnung (35, 45) mündet, oder
eine ringförmige Nut (16) aufweist, in der das Verbindungselement (11) eingeklemmt werden kann, oder
die Form eines schmalen Schlitzes (36) aufweist, der in die Öffnung (35) mündet und sich parallel zur Ebene der Öffnung des Behälters (1) erstreckt, wobei der Deckel eine Kerbe (37) aufweist, die so gestaltet ist, dass sie eine Querverschiebung des Verbindungselements zwischen einer Position, in der das Verbindungselement frei gleiten kann, und einer Position, in der es im Schlitz blockiert ist, ermöglicht, oder
die Form eines schmalen Schlitzes (46) aufweist, der in die Öffnung (45) mündet und sich in einer Richtung erstreckt, die nicht in der Ebene der Öffnung des Behälters liegt, wobei der Deckel einen Schlitz (49) für den Durchgang und die Handhabung des Verbindungselements (11) durch den Deckel aufweist, oder
die Form eines schmalen Schlitzes aufweist, der auf einer Seite in den Rand des Deckels (2) mündet.

4. Vorrichtung nach einem der Ansprüche 1 bis 3, mit einem Griff (3, 43, 53, 63), der auf einer Seite des Deckels (2, 22, 32, 42, 52, 62, 72) angeordnet und so gestaltet ist, dass er den Deckel in einer bestimmten Position hält, wenn er umgedreht wird, wobei die Innenseite nach oben gerichtet ist.

5. Vorrichtung nach einem der Ansprüche 1 bis 4, wobei der Deckel (2, 22, 32, 42, 52, 62) so konfiguriert ist, dass er die Öffnung des Behälters (1) verschließt.

6. Vorrichtung nach Anspruch 5, wobei der Deckel eine Kerbe (7, 17, 37) aufweist, die in seinem Rand ausgebildet und so geformt ist, dass sie den Durchgang des Verbindungselements (11) zwischen dem Inneren und dem Äußeren des Behälters (1) erleichtert.

7. Vorrichtung nach Anspruch 6, bei der die Kerbe die Form eines Schlitzes (17b) aufweist, der in eine durch den Deckel verlaufende Öffnung (17a) mündet, wobei der Schlitz eine solche Breite aufweist, dass das Verbindungselement (11) nicht durch ihn hindurchgehen kann, ohne dazu gezwungen zu werden.

8. Vorrichtung nach einem der Ansprüche 1 bis 3, wobei der Deckel (72) so gestaltet ist, dass er rittlings auf dem Rand der Öffnung eines Behälters (1) sitzt, der zum Zubereiten oder Trinken eines Aufgusses verwendet wird, ohne die Öffnung des Behälters zu verschließen.

9. Verfahren zum Zubereiten eines Aufgusses, das folgende Schritte umfasst:
Bereitstellen eines Behälters (1) zum Trinken oder Zubereiten eines Aufgusses,
Vorsehen eines Deckels (2, 22, 32, 42, 52, 62, 72), der so konfiguriert ist, dass er auf den Rand einer Öffnung des Behälters passt, und der eine im Allgemeinen konkave Innenseite aufweist,
einen porösen Beutel (10) vorsehen, der ein zu infundierendes Produkt enthält und mit einem flexiblen Verbindungselement (11) gekoppelt ist,
im Deckel ein Halteelement (4, 5) vorsehen, das fest mit einer Innenseite des Deckels verbunden ist und so gestaltet ist, dass es den Halt und das Gleiten des flexiblen Verbindungselements (11) des porösen Beutels (10) gewährleistet, wobei das Halteelement eine innere Trennwand (4, 34, 44, 74) ist, gegen die der Beutel durch Ziehen am Verbindungselement gedrückt werden kann, ohne dass der Deckel vom Behälter abgenommen werden muss,
ein Blockierorgan (6, 36, 46, 66, 76) vorsehen, das mit dem Verbindungselement zusammenwirkt, um den Beutel in verschiedenen einstellbaren Positionen zu blockieren, auch nach dem Pressen des Beutels und ohne dass der Deckel des Behälters entfernt werden muss, da die Trennwand eine Öffnung (5, 35, 45, 75) für den Durchgang des Verbindungselements (11) aufweist,
Einführen des Verbindungselements in das Halteelement (4, 5), und
Verriegeln des Verbindungselements mit dem Verriegelungselement (6, 36, 46, 66, 76), um den Beutel in verschiedenen einstellbaren Positionen in oder außerhalb einer im Behälter vorhandenen Flüssigkeit zu halten, auch nach dem Pressen des Beutels gegen eine Kante des Halteelements und ohne dass der Deckel vom Behälter entfernt werden muss.

10. Verfahren nach Anspruch 9, umfassend die folgenden Schritte:
Blockieren des Verbindungselements (11) mit Hilfe des Blockierelements (6, 36, 46, 66, 76), um den Beutel (10) in einer unteren Position zu halten, in der er in eine im Behälter (1) befindliche Flüssigkeit eingetaucht ist,
Blockieren des Verbindungselements mithilfe des Blockierelements, um den Beutel in einer Abtropfposition gegen das Halteelement (4, 5) zu halten, und
den Deckel mit der Innenseite nach oben umzudrehen, wenn sich der Beutel in der Abtropfposition befindet, wobei die Flüssigkeit, die aus dem Beutel auslaufen kann, in der Innenseite zurückgehalten wird.

## Claims

1. A device for preparing an infusion, comprising a lid (2, 22, 32, 42, 52, 62, 72) configured to fit over the edge of an opening of a container (1) for consumption or preparation of an infusion,
the device comprising :
a retaining element (4, 5) integral with an internal face of the lid, configured to ensure the holding and sliding of a flexible connecting element (11) coupled to a porous sachet (10) containing a product to be infused, the retaining element being an internal partition (4, 34, 44, 74) against which the sachet can be pressed by pulling on the connecting element, without having to remove the lid from the container, the partition having an opening (5, 35, 45, 75) for the passage of the connecting element (11)
a locking member (6, 36, 46, 66, 76) cooperating with the connecting element to lock the bag in various adjustable positions, even after the bag has been pressed and without having to remove the lid from the container,
the inner face of the lid being generally concave to retain a liquid when the lid is removed from the container (1) and arranged with the inner face facing upwards.

2. Device according to claim 1, in which the retaining element (4, 5) is placed in the lid so as to suspend the bag (10) centered along a longitudinal axis (X) of the container (1), via the connecting element (11), when the lid is placed on the edge of the container opening.

3. Device according to claim 2, wherein the locking member (6, 36, 46, 66, 76) :
is arranged on an external face of the lid (2, 22, 52, 72), or
is arranged or formed on a handle (63) integral with the outer face of the lid, or
takes the form of a narrow slot (36, 46) opening into the aperture (35, 45), or
comprises an annular groove (16) in which the connecting element (11) can be wedged, or
has the form of a narrow slot (36) opening into the aperture (35) and extending parallel to the plane of the container opening (1), the lid having a notch (37) configured to allow transverse displacement of the connecting element between a position in which the connecting element can slide freely and a position in which it is locked in the slot, or
has the form of a narrow slot (46) opening into the opening (45) and extending in a direction not belonging to the plane of the container opening, the lid having a slot (49) for the passage and manipulation of the connecting element (11) through the lid, or
has the form of a narrow slot opening on one side at the edge of the lid (2).

4. Device according to one of claims 1 to 3, comprising a handle (3, 43, 53, 63) arranged on one face of the lid (2, 22, 32, 42, 52, 62, 72) and configured to hold the lid in a certain position when it is turned over, with the inner face facing upwards.

5. Device according to one of claims 1 to 4, wherein the lid (2, 22, 32, 42, 52, 62) is configured to close the opening of the container (1).

6. A device according to claim 5, in which the lid has a notch (7, 17, 37) formed in its edge and shaped to facilitate passage of the connecting element (11) between the inside and outside of the container (1).

7. A device according to claim 6, in which the notch is in the form of a slot (17b) opening into an orifice (17a) passing through the lid, the slot having a width such that the connecting element (11) cannot pass through it without being forced to do so.

8. A device according to any of claims 1 to 3, in which the lid (72) is configured to straddle the edge of the opening of a container (1) used to prepare or consume an infusion, without obturating the container opening.

9. A method of preparing an infusion, comprising the steps of :
providing a container (1) for consuming or preparing an infusion,
providing a lid (2, 22, 32, 42, 52, 62, 72) configured to fit over the edge of an opening in the container, and having a generally concave inner face,
provide a porous bag (10) containing a product to be infused, and coupled to a flexible connecting element (11),
provide in the lid a retaining element (4, 5) integral with an internal face of the lid, configured to ensure holding and sliding of the flexible connecting element (11) of the porous bag (10), the retaining element being an internal partition (4, 34, 44, 74) against which the bag can be pressed by pulling on the connecting element, without having to remove the lid from the container,
provide a locking member (6, 36, 46, 66, 76) cooperating with the connecting element to lock the bag in various adjustable positions, even after the bag has been pressed and without having to remove the container lid, the partition having an opening (5, 35, 45, 75) for the passage of the connecting element (11),
insert the connecting element into the retaining element (4, 5), and
locking the connecting element by means of the locking member (6, 36, 46, 66, 76) to hold the bag in various adjustable positions in or out of a liquid present in the container, even after pressing the bag against an edge of the retaining element and without having to remove the lid from the container.

10. Method according to claim 9, comprising the steps of :
locking the connecting element (11) by means of the locking member (6, 36, 46, 66, 76), to hold the bag (10) in a lowered position where it is immersed in a liquid present in the container (1),
locking the connecting element by means of the locking member, to hold the bag in a drip position against the retaining element (4, 5), and
turn the lid over with the inner side facing upwards, when the bag is in the drip position, with any liquid that may leak from the bag being retained in the inner side.
